# EUROPÄISCHE PATENTSCHRIFT

(11) **EP 1 719 932 B1**
(45) Veröffentlichungstag und Bekanntmachung des Hinweises auf die Patenterteilung: **15.08.2007**
(21) Anmeldenummer: 05009612.2
(22) Anmeldetag: 02.05.2005
(51) Int. Cl.: F16G 3/02

(54) **Textiles Transportband sowie Verfahren zu dessen Herstellung**
Textile conveyor belt and method for its production
Bande transporteuse textile et sa méthode de réalisation

(43) Veröffentlichungstag der Anmeldung: 08.11.2006
(73) Patentinhaber: Heimbach GmbH & Co. KG, 52353 Düren (DE)
(72) Erfinder: Hilligsmann, Henri, 4720 Kelmis (BE); Walther, Werner, 4721 Neu-Moresnet (BE); Halterbeck, Walter, 52353 Düren (DE)
(74) Vertreter: Paul, Dieter-Alfred

(56) Entgegenhaltungen:
- EP-A- 1 241 378
- EP-A- 1 333 193
- DE-A1- 1 923 039
- PATENT ABSTRACTS OF JAPAN Bd. 1999, Nr. 10, 31. August 1999 (1999-08-31) -& JP 11 129341 A (HABAJITTO NIPPON KK), 18. Mai 1999 (1999-05-18)
- PATENT ABSTRACTS OF JAPAN Bd. 2003, Nr. 12, 5. Dezember 2003 (2003-12-05) -& JP 2005 015213 A (BANDO CHEM IND LTD), 20. Januar 2005 (2005-01-20)

## Beschreibung

Die Erfindung betrifft ein Transportband nach dem Oberbegriff des Anspruchs 1 sowie ein Verfahren zur Herstellung eines solchen Transportbandes nach dem Oberbegriff des Anspruchs 28.

Für die Aufbereitung und Herstellung von Lebensmitteln, beispielsweise in Bäckereimaschinen oder dergleichen, werden textile Transportbänder verwendet, auf die das zu transportierende Lebensmittel aufgelegt und dann zur Weiterverarbeitung in einen anderen Teil der Maschine oder zur Verpackungsstation transportiert wird. Ein solches Transportband hat einen textilen Träger beispielsweise in Form eines Gewebes. Länge und Breite des Transportbandes entsprechen dem jeweiligen Einsatzzweck. Um ein solches Transportband bequem in der jeweiligen Maschine installieren zu können, hat es eine endliche Länge und demgemäß an den Enden Stirnkanten, die über eine Steckdrahtnaht verbindbar sind. Das Einlegen des Transportbandes in die Maschine geschieht in nicht verbundenem Zustand. Erst in der Maschine werden dann die Stirnkanten über die Steckdrahtnaht gekuppelt.

Eine Steckdrahtnaht besteht in der Regel aus zwei Wendeln und einem oder mehreren Steckdrähten. Jeweils eine Wendel ist an einer Stirnkante des Trägers angebracht. Beim Schließen der Steckdrahtnaht werden die Wendeln in gegenseitige Überlappung gebracht, so dass von den überlappenden Bereichen der Wendeln ein Durchsteckkanal gebildet wird, durch den der Steckdraht geschoben werden kann. Über den Steckdraht werden dann die Wendeln und damit die Stirnkanten des Trägers miteinander scharnierartig gekuppelt.

Bei den bekannten Transportbändern dieser Art werden die Wendeln dadurch am Träger befestigt, dass Längsfäden des Trägers an den Stirnkanten um die Wendeln herumgelegt und zurückgewebt werden. Dies ist mit erheblichem Zeitaufwand verbunden. Hinzu kommt, dass die Zugfestigkeit der Verbindung zwischen den Wendeln und den Stirnkanten des Trägers begrenzt ist.

Aus der DE 19 23 039 A1 ist ein Fördergurt bekannt, dessen Stirnkanten ebenfalls über eine Steckdrahtnaht verbindbar sind. Bei dieser Steckdrahtnaht sind die Wendeln an Textilstreifen angebracht, die an einer Flachseite des Fördergurts befestigt sind. Die Befestigung kann durch Nähen, Kleben, Schweißen o. dgl. erfolgen. Nachteilig ist, daß der Fördergurt durch diese Art der Befestigung im Bereich der Textilstreifen eine größere Dicke hat als im übrigen Bereich, was beim Umlauf des Fördergurts zu entsprechenden Störungen führen kann.

Der Erfindung liegt die Aufgabe zugrunde, ein Transportband der eingangs genannten Art so auszubilden, dass Unstetigkeiten im Bereich der Steckdrahtnaht vermieden werden. Eine weitere Aufgabe besteht darin, ein Verfahren zur Herstellung eines solchen Transportbands bereitzustellen.

Der erste Teil der Aufgabe wird erfindungsgemäß dadurch gelöst, daß der als Textil ausgebildete Träger im Bereich der Textilstreifen eine geringere Dicke hat als im übrigen Bereich und daß die Dicke des Trägers und des an ihm angebrachten Textilstreifens zusammen der Dicke des Trägers im übrigen Bereich entspricht. Aufgrund dieser Ausbildung kommt es Bereich der Steckdrahtnaht nicht zu einer Unstetigkeit aufgrund von Dickenänderung.

In Ausbildung der Erfindung ist vorgesehen, daß die Textilstreifen auf der Seite des Transportbandes angebracht sind, auf der die Verringerung der Dicke vorgenommenen worden ist, so dass die Textilstreifen in Ausnehmungen des Trägers eingelagert werden. Um die für den Transport der Güter vorgesehene Außenfläche auch im Nahtbereich eben und kontinuierlich zu halten, sollten die Textilstreifen auf der Innenseite des Trägers angebracht sein, also auf der Seite, mit denen das Transportband Kontakt zu den Transportwalzen hat.

Die Reduzierung der Dicke des Trägers ist besonders dann einfach, wenn als Träger ein Trägergewebe verwendet wird. In diesem Fall bietet es sich an, im Bereich der Textilstreifen Querfäden zu entfernen und auf diese Weise für eine Dickenreduzierung des Trägers zu sorgen.

Die Art des Klebstoffs ist nicht beschränkt, sollte jedoch den jeweiligen Anforderungen angepaßt sein. Besonders geeignet sind Klebstoffe beispielsweise auf Silikonbasis sowie Schmelzklebstoffe, Reaktionsklebstoffe oder Kontaktklebstoffe, da sie sich einfach verarbeiten lassen und eine hohe Festigkeit der Verbindung gewährleisten.

Besonders zweckmäßig ist es, wenn sich die Klebstoffschichten ein Stück weit über die den Stirnkanten des Trägers abgewandten Seiten der Textilstreifen erstrecken, um dort für eine zusätzliche Stabilisierung des Trägers zu sorgen. Aus dem gleichen Grund ist es zweckmäßig, dass die Klebstoffschichten die Stirnkanten des Trägers bedekken, wobei es auch von Vorteil sein kann, wenn die Klebstoffschichten über die Stirnkanten des Trägers hinaus auch einen Teil der anderen Flachseite des Trägers bedekken. Auch dies trägt zur Stabilisierung des Trägers im Bereich der Naht bei.

Nach einem weiteren Merkmal der Erfindung ist vorgesehen, dass die Textilstreifen zusätzlich über Nahtfäden mit dem Träger verbunden sind, um der verbindung zwischen Textilstreifen und Träger noch mehr Festigkeit und Sicherheit zu geben. Die Nahtfäden können Nahtstreifen bilden, die sich parallel zu den Stirnkanten des Trägers und/oder quer dazu erstrecken. Im letzteren Fall sollten sie an den äußeren Rändern der Textilstreifen verlaufen.

Die Erfindung sieht des weiteren vor, dass die Textilstreifen im Bereich der Wendeln unter Bildung jeweils einer Umschlagkante und eines Umschlagstreifens umgeschlagen sind und die Umschlagstreifen mit dem jeweiligen Textilstreifen vernäht sind. Dabei sollten die Wendeln formschlüssig an der Umschlagkante befestigt sein, beispielsweise in von Längsfäden des Textilstreifens gebildeten Schlaufen.

Nach der Erfindung ist des weiteren vorgeschlagen, dass der Träger an der äußeren Flachseite mit einer Abdeckschicht versehen ist. Diese Abdeckschicht kann an die jeweiligen Anforderungen des Transportbandes angepaßt sein. So besteht die Möglichkeit, eine gegebenenfalls homogene Beschichtung aufzutragen. Je nach Art der Beschichtung können auf der Außenseite verschiedene Eigenschaften verwirklicht werden. So kann eine glatte Oberfläche oder eine eher rauhe und damit rutschfeste Oberfläche erhalten werden. Durch Wahl eines entsprechenden Werkstoffs kann die Oberfläche besonders abriebfest gestaltet werden. Auch schmutzabweisende oder hydrophobe oder hydrophile Oberflächen lassen sich durch Wahl des Werkstoffes für die Beschichtung verwirklichen. Als Werkstoffe kommen vor allem Silikonelastomere, Fluorsilikonelastomere, Polyurethanelastomere und/oder Acrylelastomere in Frage. Die Beschichtung sollte eine Dicke von bis zu 2 mm haben.

Alternativ zu einer Beschichtung kann der Träger auch mit einer Faserauflage versehen sein, die vorzugsweise aufgenadelt ist. Eine solche Abdeckschicht ergibt eine weiche und nachgiebige Oberfläche. Dabei kann die Faserauflage in mehreren Lagen unterschiedlicher Dichte oder unterschiedlichen Materials für die Fasern aufgeteilt sein. Vorzugsweise sind die Textilstreifen in die Faserauflage derart eingebettet, dass sie über die Klebstoffschichten Verbindung zum Träger haben. Dies kann beispielsweise dadurch geschehen, dass von den Stirnkanten des Transportbandes in die Faserauflage Nuten unter Freilegung des Trägers eingeformt, insbesondere eingefräst und die Textilstreifen zusammen mit den Klebstoffschichten in die Nuten eingesetzt werden und dass dann eine Klebstoffverbindung mit dem Träger hergestellt wird. Dabei sollte die Dicke der Faserauflage im Bereich der Textilstreifen zumindest um deren Dicke - vorzugsweise auch um die Dicke der Klebstoffschichten - reduziert sein. Besonders zweckmäßig ist es, die Textilstreifen auf den dem Träger abgewandten Seiten über Klebstoffschichten mit der Faserauflage zu verbinden, so dass die Textilstreifen auf der einen Seite mit dem Träger und auf der anderen Seite mit der Faserauflage verbunden sind.

Um Unstetigkeiten im Bereich der Steckdrahtnaht auf ein Minimum zu reduzieren, sollte die Abdeckschicht die Steckdrahtnaht von einer Stirnkante des Trägers her überdecken, wobei sie zweckmäßigerweise im Bereich der Steckdrahtnaht untenseitig ein Abdeckband aufweist, das bei der Herstellung der Abdeckschicht eine Verbindung mit den Wendeln verhindert. Das Abdeckband kann beispielsweise als Textilband ausgebildet sein.

Die Wendeln können - wie bekannt - aus den Werkstoffen PET, PPS oder PEEK hergestellt sein. Für den Träger eignen sich als Materialien PET, PA, PVDF, PPS oder Aramide oder Kombinationen daraus. Das Material kann für die Fäden verwendet werden, aus denen der Träger besteht. Diese können als Monofilamente, Multifilamente, gesponnene Garne, Zwirne oder Kombinationen daraus ausgebildet sein. Die Wahl des jeweiligen Fadens hängt davon ab, wie flexibel das Band sein muß, welche Festigkeit es haben soll und welche Oberfläche ausgebildet werden soll. So kann beispielsweise durch die Verwendung von Multifilamenten, gesponnenen oder verwirbelten Garnen ein flauschiger Oberflächencharakter erzeugt werden.

Der zweite Teil der Aufgabe wird erfindungsgemäß dadurch gelöst, daß, bevor die Textilstreifen angebracht werden, die dicke des als Textil ausgebildeten Trägers in dem für die Textilstreifen vorgesehenen Bereich derart verringert wird, daß nach Anbringung der Textilstreifen die Dicke des Trägers und des Textilstreifens zusammen mit der Dikke des Trägers im übrigen Bereich entspricht. Auf diese Weise werden Unstetigkeiten und die sich hieraus ergebenden Folgen beim Umlauf des Transportbands vermieden.

Dabei ist es von besonderem Vorteil, wenn zur Herstellung der Klebstoffschichten zwischen Träger und Textilstreifen Klebstoffolien eingelegt werden und die Klebstoffolien zur Herstellung der Verbindung einer solchen Temperatur ausgesetzt werden, dass sie klebfähig werden. Zusätzlich sollten die Klebstoffolien dann auch einem erhöhten Druck ausgesetzt werden, bis die Verklebung erfolgt ist.

Weitere Verfahrensmerkmale lassen sich den Ansprüchen 29 bis 54 entnehmen, deren Wortlaut ausdrücklich zum Inhalt der vorliegenden Beschreibung gemacht werden und bezüglich der auf das vorstehende Bezug genommen wird.

In der Zeichnung ist die Erfindung anhand eines Ausführungsbeispiels näher veranschaulicht. Es zeigen:
- Figur 1: eine Draufsicht auf einen Ausschnitt des erfindungsgemäßen Transportbandes mit Nahtbereich von dessen Innenseite her;
- Figur 2: einen Querschnitt durch das Transportband gemäß Figur 1;
- Figur 3: einen Querschnitt durch ein zweites Transportband im Nahtbereich mit einer als Filzschicht ausgebildeten Abdeckschicht und
- Figur 4: einen Querschnitt durch ein drittes Transportband im Nahtbereich mit Filzschicht.

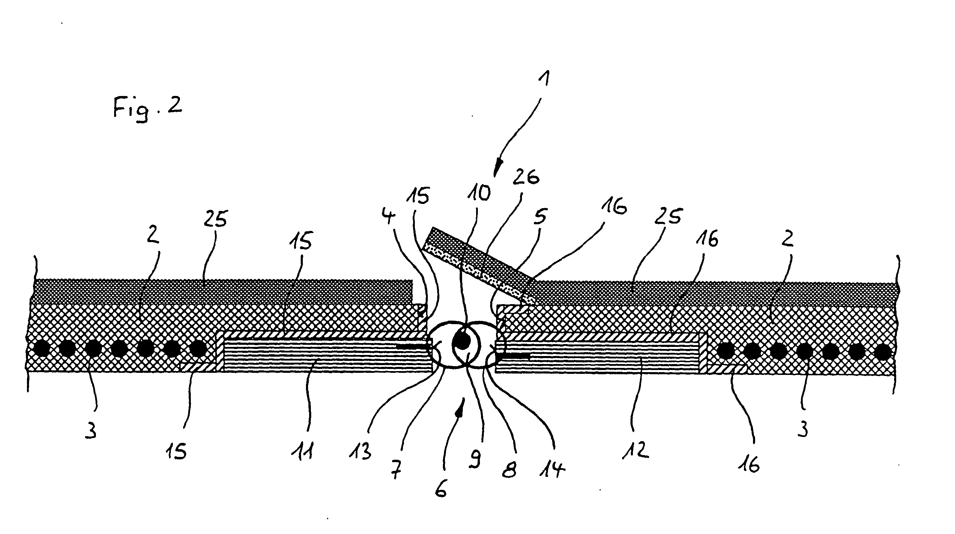

Das in den Figuren dargestellte Transportband 1 weist ein Trägergewebe 2 auf, von dem in Figur 2 nur die Querfäden - beispielhaft mit 3 bezeichnet - dargestellt sind. Die Querfäden 3 sind in einem bestimmten Bindungsmuster mit nicht näher gezeigten Längsfäden verwebt. Längs- und Querfäden 3 bilden insgesamt das Trägergewebe 2.

Das Transportband 1 ist in dem hier dargestellten Bereich aufgeteilt, hat also eine endliche Länge. Dort bildet das Trägergewebe 2 gegenüberliegende Stirnkanten 4, 5 aus.

Die Stirnkanten 4, 5 und damit die dortigen Enden des Trägergewebes 2 sind über eine Steckdrahtnaht 6 miteinander gelenkig verbunden.

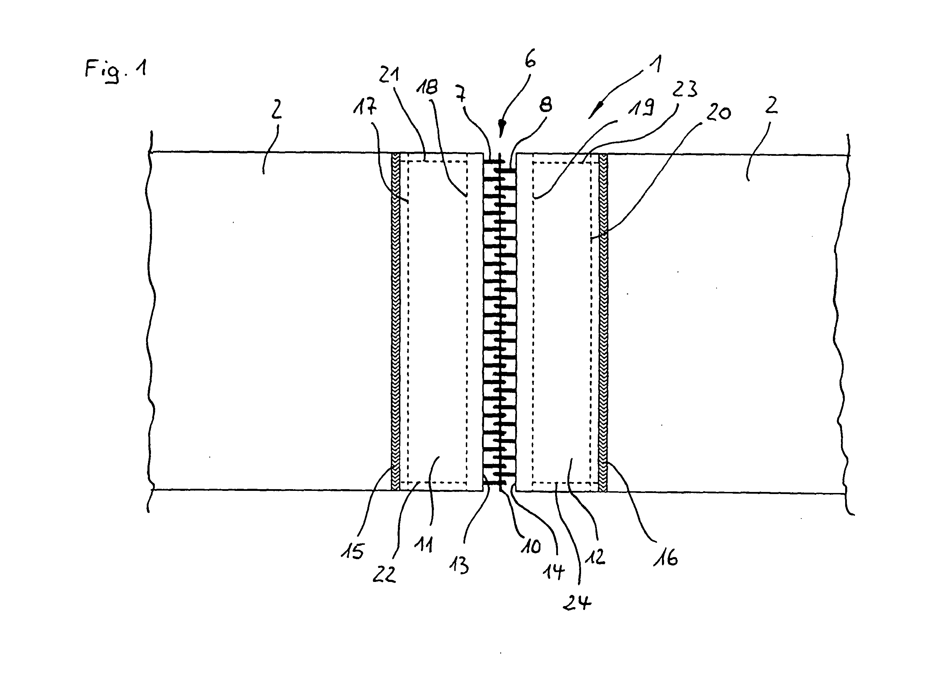

Die Steckdrahtnaht 6 weist zwei Wendeln 7, 8 auf, die sich über die gesamte Länge der Stirnkanten 4, 5, d.h. über die gesamte Breite des Transportbandes 1 erstrecken und in Figur 1 nur schematisch dargestellt sind. Die Wendeln 7, 8 überlappen sich, so dass ein Durchsteckkanal 9 im Überlappungsbereich gebildet wird, durch den ein Steckdraht 10 geschoben ist. Der Steckdraht 10 erstreckt sich ebenfalls über die gesamte Breite des Transportbandes 1 und bildet eine Art Scharnierachse für die Steckdrahtnaht 6.

Zu den Stirnkanten 4, 5 hin sind die Wendeln 7, 8 mit Textilstreifen 11, 12 verbunden. Die Verbindung geschieht in der Weise, dass die Textilstreifen 11, 12 unter Bildung von Umschlagkanten 13, 14 umgeschlagen sind und dass in die Umschlagkanten 13, 14 die Wendeln 7, 8 eingehängt sind, so dass sie fest mit den Textilstreifen 11, 12 verbunden sind. Die Textilstreifen 11, 12 sind über Klebstoffschichten 15, 16 mit der Innenseite des Trägergewebes 2 verbunden. Damit die Textilstreifen 11, 12 nicht über die Innenseite des Trägergewebes 2 vorstehen, ist das Trägergewebe 2 in dem Bereich der Textilstreifen 11, 12 dickenreduziert. Dies ist dadurch hergestellt worden, dass in diesem Bereich Querfäden 3 aus dem Trägergewebe 2 entfernt worden sind.

Die Klebstoffschichten 15, 16 sind an der den Stirnkanten 4, 5 entfernten Seite der Textilstreifen 11, 12 über deren Erstreckung hinaus weitergeführt, so dass sie das Trägergewebe 2 an der Innenseite jeweils ein Stück abdekken und verfestigen. Auch an den Stirnkanten 4, 5 selbst sind die Klebstoffschichten 15, 16 weitergeführt, so dass sie die Stirnkanten 4, 5 abdecken. Die in der Ansicht gemäß Figur 2 rechte Klebstoffschicht 16 ist zudem bis auf die Außenseite des Trägergewebes 2 geführt und dort mit diesem verbunden. Die Klebstoffschichten 15, 16 bestehen beispielsweise aus einem Schmelzklebstoff, einem Silikonklebstoff, einem Reaktionsklebstoff oder einem Kontaktklebstoff. Die Befestigung der Textilstreifen 11, 12 an dem Trägergewebe 2 ist mittels Einwirkung von Druck und Hitze erfolgt.

Wie sich aus der Darstellung gemäß Figur 1 ergibt, sind die Textilstreifen 11, 12 zusätzlich zu der Befestigung mit den Klebstoffschichten 15, 16 mit dem Trägergewebe 2 vernäht, und zwar jeweils durch zwei quer verlaufende Nahtstreifen 17, 18 bzw. 19, 20 und längs verlaufende Nahtstreifen 21, 22 bzw. 23, 24. Sie verlaufen jeweils im Bereich der Ränder der Textilstreifen 11, 12 und sorgen für zusätzliche Festigkeit.

Auf die Außenseite des Trägergewebes 2 ist eine Kunststoffbeschichtung 25 aufgebracht. Sie soll dem Transportband 1 eine gewünschte Oberfläche für den Transport der Güter geben. Damit die Kunststoffbeschichtung 25 auch den Nahtbereich, also den Bereich der Wendeln 7, 8, überdeckt, ist bei dem Auftragen der Kunststoffbeschichtung 25 dieser Bereich durch ein textiles Abdeckband 26 geschützt worden. Nach Aufbringen der Kunststoffbeschichtung 25 ist diese dann aufgetrennt worden, so dass die Beschichtung 25 im Nahtbereich angehoben werden kann. Insbesondere besteht die Möglichkeit, das Transportband 1 durch Herausziehen des Steckdrahtes 10 zu öffnen und nach Installation in einer Maschine auch wieder zu schließen und dann den hier hochstehend gezeigten Teil der Kunststoffbeschichtung 25 bündig abzusenken.

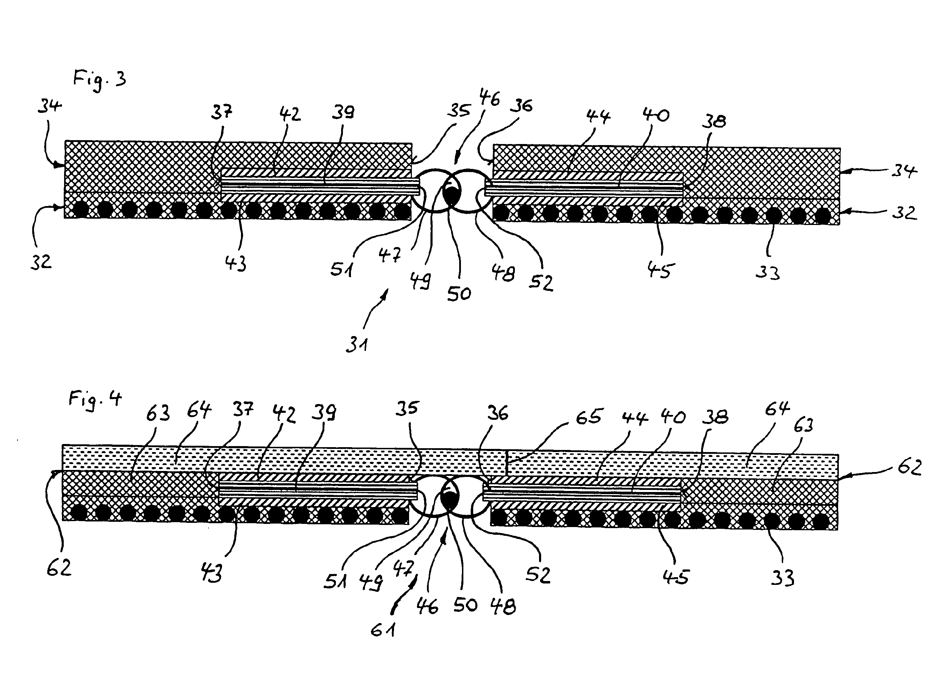

Das in Figur 3 dargestellte Transportband 31 weist ein Trägergewebe 32 auf, von dem nur die Querfäden - beispielhaft mit 33 bezeichnet - dargestellt sind. Die Querfäden 33 sind in einem bestimmten Bindungsmuster mit nicht näher gezeigten Längsfäden verwebt. Längs- und Querfäden 33 bilden insgesamt das Trägergewebe 32. Auf das Trägergewebe 32 ist außenseitig eine Filzschicht 34 aufgenadelt. Sie besteht aus einer Vielzahl von Kunststoffasern.

Das Transportband 1 ist in dem hier dargestellten Bereich aufgeteilt, hat also eine endliche Länge. Dort bildet es gegenüberliegende Stirnkanten 35, 36 aus. Von beiden Stirnkanten 35, 36 sind in die Filzschicht 34 Nuten 37, 38 eingefräst, und zwar so, dass das Trägergewebe 32 im Bereich der Nuten 37, 38 auf der der Filzschicht 34 zugewandten Seite freigelegt wird. In die Nuten 37, 38 eingesetzt sind Textilstreifen 39, 40. Das Einsetzen erfolgte unter beidseitiger Auflage von Klebstoffolien 42, 43 bzw. 44, 45 aus einem Schmelzklebstoff. Durch Hitzeaktivierung sind die Klebstoffolien 42, 43, 44, 45 plastifiziert worden, so dass eine Klebstoffverbindung einerseits mit dem Trägergewebe 32 über die Klebstoffolien 43, 45 und andererseits mit der Filzschicht 34 über die Klebstoffolien 42, 44 hergestellt worden ist.

Die Stirnkanten 35, 36 des Transportbandes 31 sind über eine Steckdrahtnaht 46 miteinander gelenkig verbunden. Die Steckdrahtnaht 46 weist zwei Wendeln 47, 48 auf, die sich über die gesamte Länge der Stirnkanten 35, 36, d.h. über die gesamte Breite des Transportbandes 31 erstrekken. Die Wendeln 47, 48 überlappen sich, so dass ein Durchsteckkanal 49 im Überlappungsbereich gebildet wird, durch den ein Steckdraht 50 geschoben ist. Der Steckdraht 50 erstreckt sich ebenfalls über die gesamte Breite des Transportbandes 31 und bildet eine Art Scharnierachse für die Steckdrahtnaht 46.

Die Wendeln 47, 48 sind mit den Textilstreifen 39, 40 verbunden. Die Verbindung geschieht in der Weise, dass die Textilstreifen 39, 40 unter Bildung von Umschlagkanten 51, 52 umgeschlagen sind und dass die wendeln 47, 48 in die Umschlagkanten 51, 52 eingehängt sind, so dass sie fest mit den Textilstreifen 39, 40 verbunden sind.

In Figur 4 ist eine Variante des Transportbandes 31 gemäß Figur 3 dargestellt. Soweit das Transportband 61 mit dem Transportband 31 gemäß Figur 3 übereinstimmt, werden für gleiche Teile gleiche Bezugsziffern verwendet. Zur Beschreibung der mit diesen Bezugsziffern gekennzeichneten Teile wird auf die vorstehende Beschreibung des Transportbandes 31 gemäß Figur 3 Bezug genommen.

Das Transportband 61 weicht von dem Transportband 31 gemäß Figur 3 nur insoweit ab, als seine Filzschicht 62 zweilagig aufgebaut ist, nämlich eine erste Filzlage 63, die direkt auf das Transportband 31 aufgenadelt ist, und eine zweite Filzlage 64 aufweist, die auf die erste Filzlage 63 aufgenadelt ist und aus einem anderen Fasermaterial besteht und/oder eine andere Dichte hat als bei der ersten Filzlage 63. Die Nuten 37, 38 sind nur in die erste Filzlage 63 eingefräst, so dass die Textilstreifen 39, 40 über die obenseitigen Klebstoffolien 42, 44 Klebverbindungen mit der zweiten Filzlage 64 haben.

Damit die Filzschicht 62 auch den Nahtbereich, also den Bereich der Wendeln 47, 48 überdeckt, setzt sich die zweite Filzlage 64 über die Steckdrahtnaht 46 hinweg und ist - versetzt zu dieser - an einer sich quer über das Transportband 61 erstreckenden Schnittstelle 65 aufgeteilt. Die Aufteilung ermöglicht es, die zweite Filzlage 64 im Bereich der Steckdrahtnaht 46 anzuheben und insbesondere das Transportband 61 durch Herausziehen des Steckdrahtes 50 zu öffnen und nach Installation in einer Maschine auch wieder zu schließen, um den in Figur 4 dargestellten Zustand wieder herzustellen.

## Patentansprüche

1. Transportband (1, 31, 61) für den Transport stückiger Güter, insbesondere von Lebensmitteln, mit einem Träger (2, 32), der endseitig Stirnkanten (4, 5, 35, 36) aufweist, die über eine Steckdrahtnaht (6, 46) verbindbar sind, wobei die Steckdrahtnaht (6, 46) wenigstens zwei über die Breite des Transportbands (1, 31, 61) sich erstreckende Wendeln (7, 8, 47, 48) aufweist, die an Textilstreifen (11, 12, 39, 40) angebracht sind, die mit dem Träger (2, 32) über Klebstoffschichten (15, 16, 42, 43, 44, 45) verbunden sind, so daß eine Wendel (7, 47) an der einen Stirnkante (4, 35) und eine Wendel (8, 48) an der anderen Stirnkante (5, 36) angebracht sind, und wobei die Wendeln (7, 8, 47, 48) derart in Überlappung bringbar sind, dass ein Steckdraht (10, 50) zur Kupplung der Wendeln (7, 8, 47, 48) und damit der Stirnkanten (4, 5, 35, 36) durch die sich überlappenden Bereiche der Wendeln (7, 8, 47, 48) steckbar ist, **dadurch gekennzeichnet, dass** der als Textil ausgebildete Träger (2) im Bereich der Textilstreifen (11, 12) eine geringere Dicke hat als im übrigen Bereich und dass die Dicke des Trägers (2) und des an ihm angebrachten Textilstreifens (11, 12) zusammen der Dicke des Trägers (2) im übrigen Bereich entspricht.

2. Transportband nach Anspruch 1, **dadurch gekennzeichnet, dass** die Textilstreifen (11, 12) auf der Seite des Transportbandes (1) angebracht sind, auf der die Verringerung der Dicke vorgenommen worden ist.

3. Transportband nach Anspruch 1 oder 2, **dadurch gekennzeichnet, dass** die Textilstreifen (11, 12) auf der Innenseite des Trägers (2) angebracht sind.

4. Transportband nach einem der Ansprüche 1 bis 3, **dadurch gekennzeichnet, dass** der Träger als Trägergewebe (2) ausgebildet ist, bei dem im Bereich der Textilstreifen (11, 12) Querfäden (3) zum Zwecke der Reduzierung der Dicke des Trägergewebes (2) entfernt sind.

5. Transportband nach einem der Ansprüche 1 bis 4, **dadurch gekennzeichnet, dass** die Klebstoffschichten (15, 16, 42, 43, 44, 45) aus einem Silikonklebstoff, Schmelzklebstoff, Reaktionsklebstoff oder Kontaktklebstoff bestehen.

6. Transportband nach einem der Ansprüche 1 bis 5, **dadurch gekennzeichnet, dass** sich die Klebstoffschichten (15, 16) über die den Stirnkanten (4, 5) des Trägers (2) abgewandten Seiten der Textilstreifen (15, 16) hinaus erstrecken.

7. Transport nach einem der Ansprüche 1 bis 6, **dadurch gekennzeichnet, dass** die Klebstoffschichten (15, 16) die Stirnkanten (4, 5) des Trägers (2) bedecken.

8. Transportband nach Anspruch 7, **dadurch gekennzeichnet, dass** die Klebstoffschichten (15, 16) über die Stirnkanten (4, 5) des Trägers (2) hinaus auch einen Teil der anderen Flachseite des Trägers (2) bedekken.

9. Transportband nach einem der Ansprüche 1 bis 8, **dadurch gekennzeichnet, dass** die Textilstreifen (11, 12) zusätzlich über Nahtfäden (17 - 24) mit dem Träger (2) verbunden sind.

10. Transportband nach Anspruch 9, **dadurch gekennzeichnet, dass** die Nahtfäden Nahtstreifen (17 - 24) bilden, die sich parallel zu den Stirnkanten (4, 5) des Trägers (2) und/oder quer dazu erstrecken.

11. Transportband nach Anspruch 10, **dadurch gekennzeichnet, dass** die sich zu den Stirnkanten (4, 5) quer erstreckenden Nahtstreifen (21 - 24) an den äußeren Rändern der Textilstreifen (11, 12) verlaufen.

12. Transportband nach einem der Ansprüche 1 bis 11, **dadurch gekennzeichnet, dass** die Textilstreifen (11, 12, 39, 40) im Bereich der Wendeln (7, 8, 47, 48) unter Bildung jeweils einer Umschlagkante (13, 14, 51, 52) und eines Umschlagstreifens umgeschlagen sind und die Umschlagstreifen mit dem jeweiligen Textilstreifen (11, 12, 39, 40) vernäht sind.

13. Transportband nach Anspruch 12, **dadurch gekennzeichnet, dass** die Wendeln (7, 8, 47, 48) formschlüssig an der Umschlagkante (13, 14, 51, 52) befestigt sind.

14. Transportband nach einem der Ansprüche 1 bis 13, **dadurch gekennzeichnet, dass** der Träger (2, 32) an der äußeren Flachseite mit einer Abdeckschicht (25, 34) versehen ist.

15. Transportband nach Anspruch 14, **dadurch gekennzeichnet, dass** die Abdeckschicht als Beschichtung (25) ausgebildet ist.

16. Transportband nach Anspruch 15, **dadurch gekennzeichnet, dass** die Beschichtung (25) aus Silikonelastomer, Fluorsilikonelastomer, Polyurethanelastomer und/oder Acrylelastomer besteht.

17. Transportband nach Anspruch 15 oder 16, **dadurch gekennzeichnet, dass** die Beschichtung (25) eine Dicke von bis zu 2 mm hat.

18. Transportband nach Anspruch 14, **dadurch gekennzeichnet, dass** die Abdeckschicht als Faserauflage (34, 62) ausgebildet ist.

19. Transportband nach Anspruch 18, **dadurch gekennzeichnet, dass** die Textilstreifen (39, 40) in die Faserauflage (34, 62) derart eingebettet sind, dass sie über die Klebstoffschichten (43, 45) Verbindung zum Träger (32) haben.

20. Transportband nach Anspruch 19, **dadurch gekennzeichnet, dass** die Dicke der Faserauflage (34, 62) im Bereich der Textilstreifen (39, 40) zumindest um deren Dicke reduziert ist.

21. Transportband nach Anspruch 19 oder 20, **dadurch gekennzeichnet, dass** die Textilstreifen (39, 40) auf den dem Träger (32) abgewandten Seiten über Klebstoffschichten (42, 44) mit der Faserauflage (34, 62) verbunden sind.

22. Transportband nach einem der Ansprüche 14 bis 21, **dadurch gekennzeichnet, dass** die Abdeckschicht (25, 62) die Steckdrahtnaht (6) von einer Stirnkante (5, 35) des Trägers (2, 32) her überdeckt.

23. Transportband nach Anspruch 22, **dadurch gekennzeichnet, dass** die Abdeckschicht (25) im Bereich der Steckdrahtnaht (6) untenseitig ein Abdeckband (26) aufweist.

24. Transportband nach Anspruch 23, **dadurch gekennzeichnet, dass** das Abdeckband (26) als Textilband ausgebildet ist.

25. Transportband nach einem der Ansprüche 1 bis 24, **dadurch gekennzeichnet, dass** die Wendeln (7, 8, 47, 48) aus PET, PPS oder PEEK bestehen.

26. Transportband nach einem der Ansprüche 1 bis 25, **dadurch gekennzeichnet, dass** der Träger (2, 32) aus PET, PA, PVDF, PPS oder Aramiden oder Kombinationen daraus besteht.

27. Transportband nach einem Ansprüche 1 bis 26, **dadurch gekennzeichnet, dass** der Träger (2, 32) aus Fäden (3) besteht, die als Monofilamente, Multifilamente, gesponnene Garne, Zwirne oder Kombinationen daraus ausgebildet sind.

28. Verfahren zur Herstellung eines Transportbandes (1, 31, 61) für den Transport stückiger Güter, insbesondere von Lebensmitteln, bei dem ein Träger (2, 32) an seinen endseitigen Stirnkanten (4, 5, 35, 36) mit über die Breite des Transportbandes (1, 31, 61) sich erstreckenden Wendeln (7, 8, 47, 48) versehen wird, die zur Verbindung der Stirnkanten (4, 5, 35, 36) des Transportbandes (1, 31, 61) derart in Überlappung bringbar sind, dass ein Steckdraht (10, 50) zur Kupplung der Wendeln (7, 8, 47, 48) und damit der Stirnkanten (4, 5, 35, 36) durch die sich überlappenden Bereiche steckbar ist, wobei die Wendeln (7, 8, 47, 48) zunächst jeweils an einem Textilstreifen (11, 12, 39, 40) angebracht werden und die Textilstreifen (11, 12, 39, 40) mit dem Träger (2, 32) über Klebstoffschichten (15, 16, 42, 43, 44, 45) verbunden werden, **dadurch gekennzeichnet, dass**, bevor die Textilstreifen (11, 2) angebracht werden, die Dicke des als Textil ausgebildeten Trägers (2) in dem für die Textilstreifen (11, 12) vorgesehenen Bereich derart verringert wird, dass nach Anbringung der Textilstreifen (11, 12) die Dicke des Trägers (2) und des Textilstreifens (11, 12) zusammen der Dicke des Trägers (2) im übrigen Bereich entspricht.

29. Verfahren nach Anspruch 28, **dadurch gekennzeichnet, dass** zur Herstellung der Klebstoffschichten (15, 16, 42, 43, 44, 45) zwischen Träger (2, 32) und Textilstreifen (11, 12, 39, 40) Klebstoffolien eingelegt werden und die Klebstoffolien zur Herstellung der Klebstoffverbindung einer solchen Temperatur ausgesetzt werden, dass sie klebfähig werden.

30. Verfahren nach Anspruch 29, **dadurch gekennzeichnet, dass** die Klebstoffolien (15, 16, 42, 43, 44, 45) zusätzlich erhöhtem Druck ausgesetzt werden.

31. Verfahren nach einem der Ansprüche 28 bis 30, **dadurch gekennzeichnet, dass** für die Klebstoffschichten (15, 16, 42, 43, 44, 45) ein Silikonklebstoff, Schmelzklebstoff, Reaktionsklebstoff oder Kontaktklebstoff verwendet wird.

32. Verfahren nach einem der Ansprüche 28 bis 31, **dadurch gekennzeichnet, dass** die Klebstoffschichten (15, 16) derart ausgedehnt werden, dass sie sich über die den Stirnkanten (4, 5) des Trägers (2) abgewandten Seiten der Textilstreifen (11, 12) hinaus erstrecken.

33. Verfahren nach einem der Ansprüche 28 bis 32, **dadurch gekennzeichnet, dass** die Klebstoffschichten (15, 16) auch auf die Stirnkanten (4, 5) des Trägers (2) ausgedehnt werden.

34. Verfahren nach Anspruch 33, **dadurch gekennzeichnet, dass** die Klebstoffschichten (15, 16) über die Stirnkanten (4, 5) des Trägers (2) hinaus auch auf die andere Flachseite des Trägers (2) ausgedehnt werden.

35. Verfahren nach einem der Ansprüche 28 bis 34, **dadurch gekennzeichnet, dass** der Träger als Trägergewebe (2) hergestellt wird und dass in dem für die Textilstreifen (11, 12) vorgesehenen Bereich Querfäden (3) zum Zwecke der Dickenreduzierung des Trägergewebes (2) entfernt werden.

36. Verfahren nach einem der Ansprüche 28 bis 35, **dadurch gekennzeichnet, dass** die Textilstreifen (11, 12) an der Seite des Trägers (2) angebracht werden, an der die Dickenreduzierung durchgeführt worden ist.

37. Verfahren nach einem der Ansprüche 28 bis 36, **dadurch gekennzeichnet, dass** die Textilstreifen (11, 12) an der Innenseite des Trägers (2) angebracht werden.

38. Verfahren nach einem der Ansprüche 28 bis 37, **dadurch gekennzeichnet, dass** die Textilstreifen (11, 12) zusätzlich mit dem Träger (2) vernäht werden.

39. Verfahren nach Anspruch 38, **dadurch gekennzeichnet, dass** das Vernähen in Form von Nahtstreifen (17, 24) durchgeführt wird, die sich parallel zu den Stirnkanten (4, 5) des Trägers (2) und/oder quer dazu erstrecken.

40. Verfahren nach Anspruch 39, **dadurch gekennzeichnet, dass** die Textilstreifen (11, 12) an den äußeren, sich quer zu den Stirnkanten (4, 5) des Trägers (2) erstreckenden Rändern vernäht werden.

41. Verfahren nach einem der Ansprüche 28 bis 40, **dadurch gekennzeichnet, dass** der Träger (2) an der äußeren Flachseite mit einer Abdeckschicht (25, 34) versehen wird.

42. Verfahren nach Anspruch 41, **dadurch gekennzeichnet, dass** als Abdeckschicht eine Beschichtung (25) aufgetragen wird.

43. Verfahren nach Anspruch 42, **dadurch gekennzeichnet, dass** für die Beschichtung (25) Silikonelastomer, Fluorsilikonelastomer, Polyurethanelastomer und/oder Acrylelastomer verwendet wird.

44. Verfahren nach Anspruch 42 oder 43, **dadurch gekennzeichnet, dass** die Beschichtung (25) in einer Dicke von bis zu 2 mm aufgetragen wird.

45. Verfahren nach Anspruch 41, **dadurch gekennzeichnet, dass** als Abdeckschicht eine Faserauflage (34, 62) aufgetragen wird.

46. Verfahren nach Anspruch 45, **dadurch gekennzeichnet, dass** die Faserauflage (34, 62) aufgenadelt wird.

47. Verfahren nach Anspruch 45 oder 46, **dadurch gekennzeichnet, dass** von den Stirnkanten (35, 36) des Transportbandes (31, 61) in die Faserauflage (34, 62) Nuten (37, 38) unter Freilegung des Trägers (32) eingeformt, insbesondere eingefräst und die Textilstreifen (39, 40) zusammen mit den Klebstoffschichten (42, 43, 44, 45) in die Nuten (37, 38) eingesetzt werden und dass dann eine Klebstoffverbindung mit dem Träger (31, 61) hergestellt wird.

48. Verfahren nach Anspruch 47, **dadurch gekennzeichnet, dass** die Textilstreifen (39, 40) mit beidseitig aufgetragenen Klebstoffschichten (42, 43, 44, 45) in die Nuten (37, 38) eingesetzt und einerseits mit dem Träger (31, 61) und andererseits mit der Faserauflage (34, 62) verbunden werden.

49. Verfahren nach einem der Ansprüche 41 bis 48, **dadurch gekennzeichnet, dass** vor dem Aufbringen der Abdeckschicht (25, 34, 62) die Wendeln (7, 8, 47, 48) mit Hilfe des Steckdrahtes (10, 50) gekuppelt werden, und dann die Abdeckschicht (25, 34, 62) auch über die Steckdrahtnaht (6, 46) aufgebracht wird und dass danach die Abdeckschicht (25, 34, 62) im Bereich der Wendeln (7, 8, 47, 48) oder versetzt zu diesen über die gesamte Länge der Stirnkanten (4, 5, 35, 36) des Trägers (2, 32) aufgetrennt wird.

50. Verfahren nach Anspruch 49, **dadurch gekennzeichnet, dass** vor Aufbringen der Abdeckschicht (25, 34, 62) ein Abdeckband (26) auf die Wendeln aufgelegt wird.

51. Verfahren nach Anspruch 50, **dadurch gekennzeichnet, dass** als Abdeckband (26) ein Textilband verwendet wird.

52. Verfahren nach einem der Ansprüche 28 bis 51, **dadurch gekennzeichnet, dass** für die Wendeln (7, 8, 47, 48) PET, PPS oder PEEK verwendet wird.

53. Verfahren nach einem der Ansprüche 28 bis 52, **dadurch gekennzeichnet, dass** für den Träger (2, 32) PET, PA, PVDF, PPS oder Aramide oder Kombinationen daraus verwendet werden.

54. Verfahren nach einem der Ansprüche 28 bis 53, **dadurch gekennzeichnet, dass** für den Träger (2, 32) Fäden (3, 33) verwendet werden, die als Monofilamente, Multifilamente, gesponnene Garne, Zwirne oder Kombinationen daraus ausgebildet sind.

## Claims

1. Conveyor belt (1, 31, 61) for the conveyance of packaged goods, particularly foodstuffs, with a substrate (2, 32) which has sheet edges at the end (4, 5, 35, 36) which can be connected through a wire rod coupling (6, 46), in which the wire rod coupling (6, 46) has at least two coils (7, 8, 47, 48) which extend across the width of the conveyor belt (1, 31, 61) and are arranged on textile strips (11, 12, 39, 40) which are bonded to the substrate (2, 32) by adhesive layers (15, 16, 42, 43, 44, 45), so that one coil (7, 47) is attached to one sheet edge (4, 35) and one coil (8, 48) is attached to the other sheet edge (5, 36), and in which the coils (7, 8, 47, 48) can be made to overlap so that a wire rod (10, 50) can be pushed through the overlapping areas of the coils (7, 8, 47, 48) to connect the coils (7, 8, 47, 48) and therefore the sheet edges (4, 5, 35, 36), **characterised in that** the substrate (2) in textile form has a lower thickness in the area of the textile strips (11, 12) than in the remaining area and so that the total thickness of the substrate (2) and the textile strip (11, 12) attached to it corresponds to the thickness of the substrate (2) in the remaining area.

2. Conveyor belt according to claim 1, **characterised in that** the textile strips (11, 12) are attached to the side of the conveyor belt (1) on which the thickness has been reduced.

3. Conveyor belt according to claim 1 or 2, **characterised in that** the textile strips (11, 12) are attached to the inside of the substrate (2).

4. Conveyor belt according to one of claims 1 to 3, **characterised in that** the substrate is in the form of substrate fabric (2), from which cross threads (3) have been removed in the area of the textile strips (11, 12) to reduce the thickness of the substrate fabric (2).

5. Conveyor belt according to one of claims 1 to 4, **characterised in that** the adhesive layers (15, 16, 42, 43, 44, 45) consist of a silicone adhesive, hot melt adhesive, reactive adhesive or contact adhesive.

6. Conveyor belt according to one of claims 1 to 5, **characterised in that** the adhesive layers (15, 16) extend beyond the sides of the textile strips (15, 16) facing away from the sheet edges (4, 5) of the substrate (2).

7. Conveyor belt according to one of claims 1 to 6, **characterised in that** the adhesive layers (15, 16) cover the sheet edges (4, 5) of the substrate (2).

8. Conveyor belt according to claim 7, **characterised in that** the adhesive layers (15, 16) also cover part of the other flat side of the substrate (2) beyond the sheet edges (4, 5) of the substrate (2).

9. Conveyor belt according to one of claims 1 to 8, **characterised in that** the textile strips (11, 12) are also joined to the substrate (2) by stitches (17 - 24).

10. Conveyor belt according to claim 9, **characterised in that** the stitches form seams (17 - 24) which extend parallel to the sheet edges (4, 5) of the substrate (2) and/or at an angle to them.

11. Conveyor belt according to claim 10, **characterised in that** the seams (21 - 24) extending at an angle to the sheet edges (4, 5) run along the outer edges of the textile strips (11, 12).

12. Conveyor belt according to one of claims 1 to 11, **characterised in that** the textile strips (11, 12, 39, 40) are folded over in the area of the coils (7, 8, 47, 48) to form a folded edge (13, 14, 51, 52) and a folded strip in each case and the folded strips are stitched to each textile strip (11, 12, 39, 40).

13. Conveyor belt according to claim 12, **characterised in that** the coils (7, 8, 47, 48) are positively fixed to the folded edge (13, 14, 51, 52).

14. Conveyor belt according to one of claims 1 to 13, **characterised in that** the substrate (2, 32) is given a protective layer (25, 34) on the external flat side.

15. Conveyor belt according to claim 14, **characterised in that** the protective layer is in the form of a coating (25).

16. Conveyor belt according to claim 15, **characterised in that** the coating (25) consists of silicone elastomer, fluorosilicone elastomer, polyurethane elastomer and/or acrylic elastomer.

17. Conveyor belt according to claim 15 or 16, **characterised in that** the coating (25) has a thickness of up to 2 mm.

18. Conveyor belt according to claim 14, **characterised in that** the protective layer is in the form of a fibre overlay (34, 62).

19. Conveyor belt according to claim 18, **characterised in that** the textile strips (39, 40) are embedded in the fibre overlay (34, 62) so that they are bonded to the substrate (32) through the adhesive layers (43, 45).

20. Conveyor belt according to claim 19, **characterised in that** the thickness of the fibre overlay (34, 62) is reduced in the area of the textile strips (39, 40) by at least their thickness.

21. Conveyor belt according to claim 19 or 20, **characterised in that** the textile strips (39, 40) are bonded to the fibre overlay (34, 62) on the sides facing away from the substrate (32) through adhesive layers (42,44).

22. Conveyor belt according to one of claims 14 to 21, **characterised in that** the protective layer (25, 62) covers the wire rod coupling (6) from a sheet edge (5, 35) of the substrate (2, 32).

23. Conveyor belt according to claim 22, **characterised in that** the protective layer (25) has a cover strip underneath (26) in the area of the wire rod coupling (6).

24. Conveyor belt according to claim 23, **characterised in that** the cover strip (26) is in the form of a textile strip.

25. Conveyor belt according to one of claims 1 to 24, **characterised in that** the coils (7, 8, 47, 48) are made of PET, PPS or PEEK.

26. Conveyor belt according to claims 1 to 25, **characterised in that** the substrate (2, 32) is made of PET, PA, PVDF, PPS, aramids or combinations of these.

27. Conveyor belt according to one of claims 1 to 26, **characterised in that** the substrate (2, 32) is made of threads (3) which are in the form of monofilaments, multifilaments, spun yarns, thread or combinations of these.

28. Method for production of a conveyor belt (1, 31, 61) for conveyance of packaged goods, particularly foodstuffs, in which a substrate (2, 32) is provided on its end sheet edges (4, 5, 35, 36) with coils (7, 8, 47, 48) extending across the width of the conveyor belt (1, 31, 61) which can be made to overlap to join the sheet edges (4, 5, 35, 36) of the conveyor belt (1, 31, 61) so that a wire rod (10, 50) can be inserted through the overlapping areas to connect the coils (7, 8, 47, 48) and therefore the sheet edges (4, 5, 35, 36), in which the coils (7, 8, 47, 48) are first attached to a textile strip (11, 12, 39, 40) and the textile strips (11, 12, 39, 40) are bonded to the substrate (2, 32) through adhesive layers (15, 16, 42, 43, 44, 45), **characterised in that** before the textile strips (11, 2) are attached, the thickness of the substrate (2) in textile form is reduced in the area provided for the textile strips (11, 12) so that after attachment of the textile strips (11, 12), the total thickness of the substrate (2) and textile strip (11, 12) corresponds to the thickness of the substrate (2) in the remaining area.

29. Method according to claim 28, **characterised in that** adhesive films are inserted to produce the adhesive layers (15, 16, 42, 43, 44, 45) between the substrate (2, 32) and the textile strips (11, 12, 39, 40) and the adhesive films to form the adhesive bond are subjected to a temperature which makes them adhesive.

30. Method according to claim 29, **characterised in that** the adhesive films (15, 16, 42, 43, 44, 45) are also subjected to increased pressure.

31. Method according to one of claims 28 to 30, **characterised in that** a silicone adhesive, hot melt adhesive, reactive adhesive or contact adhesive is used for the adhesive layers (15, 16, 42, 43, 44, 45).

32. Method according to one of claims 28 to 31, **characterised in that** the adhesive layers (15, 16) are extended so that they stretch beyond the sides of the textile strips (11, 12) facing away from the sheet edges (4, 5) of the substrate (2).

33. Method according to one of claims 28 to 32, **characterised in that** the adhesive layers (15, 16) are also extended onto the sheet edges (4, 5) of the substrate (2).

34. Method according to claim 33, **characterised in that** the adhesive layers (15, 16) are extended beyond the sheet edges (4, 5) of the substrate (2) to the other flat side of the substrate (2).

35. Method according to one of claims 28 to 34, **characterised in that** the substrate is in the form of substrate fabric (2) and cross threads (3) are removed from the area provided for the textile strips (11, 12) to reduce the thickness of the substrate fabric (2).

36. Method according to one of claims 28 to 35, **characterised in that** the textile strips (11, 12) are attached to the side of the substrate (2) on which the thickness has been reduced.

37. Method according to one of claims 28 to 36, **characterised in that** the textile strips (11, 12) are attached to the inside of the substrate (2).

38. Method according to one of claims 28 to 37, **characterised in that** the textile strips (11, 12) are also stitched to the substrate (2).

39. Method according to claim 28, **characterised in that** the stitching takes the form of seams (17, 24) which extend parallel to the sheet edges (4, 5) of the substrate (2) and/or at an angle to them.

40. Method according to claim 39, **characterised in that** the textile strips (11, 12) are stitched to the outer edges extending at an angle to the sheet edges (4, 5) of the substrate (2).

41. Method according to one of claims 28 to 40, **characterised in that** the substrate (2) is given a protective layer (25, 34) on the outer flat side.

42. Method according to claim 41, **characterised in that** a coating (25) is applied as the protective layer.

43. Method according to claim 42, **characterised in that** silicone elastomer, fluorosilicone elastomer, polyurethane elastomer and/or acrylic elastomer is used for the coating (25).

44. Method according to claim 42 or 43, **characterised in that** the coating (25) is applied in a thickness of up to 2 mm.

45. Method according to claim 41, **characterised in that** a fibre overlay (34, 62) is applied as the protective layer.

46. Method according to claim 45, **characterised in that** the fibre overlay (34, 62) is pinned on.

47. Method according to claim 45 or 46, **characterised in that** grooves (37, 38) are formed and particular milled from the sheet edges (35, 36) of the conveyor belt (31, 61) into the fibre overlay (34, 62), to expose the substrate (32) and the textile strips (39, 40) are set into the grooves (37, 38) with the adhesive layers (42, 43, 44, 45) so that an adhesive bond with the substrate (31, 61) is then produced.

48. Method according to claim 47, **characterised in that** the textile strips (39, 40) with adhesive layers (42, 43, 44, 45) applied on both sides are set into the grooves (37, 38) and bonded on one side with the substrate (31, 61) and on the other with the fibre overlay (34, 62).

49. Method according to one of claims 41 to 48, **characterised in that** before applying the protective layer (25, 34, 62), the coils (7, 8, 47, 48) are coupled using the wire rod (10, 50) and the protective layer (24, 34, 62) is then also applied through the wire rod (6, 46) so that the protective layer (25, 34, 62) is debonded around the coils (7, 8, 47, 48) or offset from them over the whole length of the sheet edges (4, 5, 35, 36) of the substrate (2, 32).

50. Method according to claim 49, **characterised in that** before applying the protective layer (25, 34, 62), a cover strip (26) is placed over the coils.

51. Method according to claim 50, **characterised in that** a textile strip is used as the cover strip (26).

52. Method according to one of claims 28 to 51, **characterised in that** PET, PPS or PEEK is used for the coils (7, 8, 47, 48).

53. Method according to one of claims 28 to 52, **characterised in that** PET, PA, PVDF, PPS , aramids or combinations of these are used for the substrate (2, 32).

54. Method according to one of claims 28 to 53, **characterised in that** threads (3, 33) are used for the substrate (2, 32) which are in the form of monofilaments, multifilaments, spun yarns, thread or combinations of these.

## Revendications

1. Bande de transport (1, 31, 61) pour le transport de marchandises individuelles, en particulier de produits alimentaires, comportant un support (2, 32), qui comporte au niveau des extrémités des bords frontaux (4, 5, 35, 36) qui peuvent être assemblés par l'intermédiaire d'un assemblage par fil métallique (6, 46), l'assemblage par fil métallique (6, 46) comportant au moins deux spirales (7, 8, 47, 48) qui s'étendent sur la largeur de la bande de transport (1, 31, 61) et qui sont attachées à des bandes textiles (11, 12, 39, 40) qui sont reliées par des couches de colle (15, 16, 42, 43, 44, 45) avec le support (2, 32), de telle sorte qu'une spirale (7, 47) est attachée à un bord frontal (4, 35) et une spirale (8, 48) est attachée à l'autre bord frontal (5, 36), et les spirales (7, 8, 47, 48) pouvant être amenées en chevauchement, de telle sorte qu'un fil métallique de fixation (10, 50) peut être enfiché à travers les zones chevauchantes des spirales (7, 8, 47, 48) pour accoupler les spirales (7, 8, 47, 48) et, de ce fait, les bords frontaux (4, 5, 35, 36), **caractérisée en ce que** le support (2), réalisé en textile, a dans la zone des bandes textiles (11, 12) une plus faible épaisseur que dans la zone restante, et **en ce que** l'épaisseur du support (2) et l'épaisseur de la bande textile (11, 12), qui lui est attachée, correspondent conjointement à l'épaisseur du support (2) dans la zone restante.

2. Bande de transport selon la revendication 1, **caractérisée en ce que** les bandes textiles (11, 12) sont disposées sur le côté de la bande de transport (1) sur lequel l'épaisseur a été diminuée.

3. Bande de transport selon la revendication 1 ou 2, **caractérisée en ce que** les bandes textiles (11, 12) sont disposées sur la face intérieure du support (2).

4. Bande de transport selon l'une quelconque des revendications 1 à 3, **caractérisée en ce que** le support est réalisé sous forme de tissu de support (2), dans lequel des fils de trame (3) ont été enlevés dans la zone des bandes textiles (11, 12) afin de réduire l'épaisseur du tissu de support (2).

5. Bande de transport selon l'une quelconque des revendications 1 à 4, **caractérisée en ce que** les couches de colle (15, 16, 42, 43, 44, 45) sont réalisées en colle silicone, en colle thermofusible, en colle réactive ou en colle de contact.

6. Bande de transport selon l'une quelconque des revendications 1 à 5, **caractérisée en ce que** les couches de colle (15, 16) s'étendent au-delà des côtés des bandes textiles (11, 12), opposés aux bords frontaux (4, 5).

7. Bande de transport selon l'une quelconque des revendications 1 à 6, **caractérisée en ce que** les couches de colle (15, 16) couvrent les bords frontaux (4, 5) du support (2).

8. Bande de transport selon la revendication 7, **caractérisée en ce que** les couches de colle (15, 16) couvrent également une partie de l'autre côté plat du support (2) en s'étendant au-delà des bords frontaux (4, 5) du support (2).

9. Bande de transport selon l'une quelconque des revendications 1 à 8, **caractérisée en ce que** les bandes textiles (11, 12) sont reliées en plus par l'intermédiaire de fils à coudre (17 - 24) avec le support (2).

10. Bande de transport selon la revendication 9, **caractérisée en ce que** les fils à coudre forment des bandes de piqûre (17 - 24) qui s'étendent parallèlement aux bords frontaux (4, 5) du support (2) et/ou transversalement à ceux-ci.

11. Bande de transport selon la revendication 10, **caractérisée en ce que** les bandes de piqûre (21 - 24), orientées transversalement aux bords frontaux (4, 5), s'étendent sur les bords extérieurs des bandes textiles (11, 12).

12. Bande de transport selon l'une quelconque des revendications 1 à 11, **caractérisée en ce que** les bandes textiles (11, 12, 39, 40) sont rabattues dans la zone des spirales (7, 8, 47, 48) en formant respectivement une arête de pli (13, 14, 51, 52) et une bande rabattue et les bandes rabattues sont cousues avec les bandes textiles (11, 12, 39, 40) respectives.

13. Bande de transport selon la revendication 12, **caractérisée en ce que** les spirales (7, 8, 47, 48) sont fixées par engagement positif à l'arête de pli (13, 14, 51, 52).

14. Bande de transport selon l'une quelconque des revendications 1 à 13, **caractérisée en ce que** le support (2, 32) comporte une couche de recouvrement (25, 34) sur le côté plat extérieur.

15. Bande de transport selon la revendication 14, **caractérisée en ce que** la couche de recouvrement est réalisée sous forme de revêtement (25).

16. Bande de transport selon la revendication 15, **caractérisée en ce que** le revêtement (25) est réalisé en élastomère de silicone, en élastomère de silicone fluorée, en élastomère de polyuréthanne et/ou en élastomère acrylique.

17. Bande de transport selon la revendication 15 ou 16, **caractérisée en ce que** le revêtement (25) a une épaisseur jusqu'à 2 mm.

18. Bande de transport selon la revendication 14, **caractérisée en ce que** la couche de recouvrement est réalisée sous forme de nappe de fibres (34, 62).

19. Bande de transport selon la revendication 18, **caractérisée en ce que** les bandes textiles (39, 40) sont enrobées dans la nappe de fibres (34, 62) de telle sorte qu'elles sont reliées avec le support (32) par l'intermédiaire des couches de colle (43, 45).

20. Bande de transport selon la revendication 19, **caractérisée en ce que** l'épaisseur de la nappe de fibres (34, 62) est diminuée dans la zone des bandes textiles (39, 40) d'une valeur correspondant au moins à l'épaisseur de celles-ci.

21. Bande de transport selon la revendication 19 ou 20, **caractérisée en ce que** les bandes textiles (39, 40), sur les côtés opposés au support (32), sont reliées à la nappe de fibres (34, 62) par l'intermédiaire de couches de colle (42, 44).

22. Bande de transport selon l'une quelconque des revendications 14 à 21, **caractérisée en ce que** la couche de recouvrement (25, 62) recouvre l'assemblage par fil métallique (6) à partir d'un bord frontal (5, 35) du support (2, 32).

23. Bande de transport selon la revendication 22, **caractérisée en ce que** la couche de recouvrement (25) comporte une bande de recouvrement (26) sur la face inférieure dans la zone de l'assemblage par fil métallique (6).

24. Bande de transport selon la revendication 23, **caractérisée en ce que** la bande de recouvrement (26) est réalisée sous forme de ruban textile.

25. Bande de transport selon l'une quelconque des revendications 1 à 24, **caractérisée en ce que** les spirales (7, 8, 47, 48) sont réalisées en polyéthylène téréphtalate (PET), polysulfure de phénylène (PPS) ou polyétheréthercétone (PEEK).

26. Bande de transport selon l'une quelconque des revendications 1 à 25, **caractérisée en ce que** le support (2, 32) est réalisé en polyéthylène téréphtalate (PET), polyamide (PA), polyvinylidènefluorure (PVDF), polysulfure de phénylène (PPS) ou en aramides ou des combinaisons de ceux-ci.

27. Bande de transport selon l'une quelconque des revendications 1 à 26, **caractérisée en ce que** le support (2, 32) est réalisé en fils (3), qui sont formés par des monofilaments, des multifilaments, des fils filés, des fils retors ou des combinaisons de ceux-ci.

28. Procédé de réalisation d'une bande de transport (1, 31, 61) pour le transport de marchandises individuelles, en particulier de produits alimentaires, dans lequel un support (2, 32), au niveau de ses bords frontaux (4, 5, 35, 36) du côté des extrémités, est muni de spirales (7, 8, 47, 48) qui s'étendent sur la largeur de la bande de transport (1, 31, 61) et qui, pour relier les bords frontaux (4, 5, 35, 36) de la bande de transport (1, 31, 61), sont amenées en chevauchement de telle sorte qu'un fil métallique de fixation (10, 50) peut être enfiché à travers les zones chevauchantes pour accoupler les spirales (7, 8, 47, 48) et, de ce fait, les bords frontaux (4, 5, 35, 36), les spirales (7, 8, 47, 48) étant attachées d'abord respectivement à une bande textile (11, 12, 39, 40) et les bandes textiles (11, 12, 39, 40) étant reliées au support (2, 32) par l'intermédiaire de couches de colle (15, 16, 42, 43, 44, 45), **caractérisé en ce que**, avant la fixation des bandes textiles (11, 12), l'épaisseur du support (2), réalisé en textile, a été diminuée dans la zone prévue pour les bandes textiles (11, 12), de telle sorte qu'après la fixation des bandes textiles (11, 12), l'épaisseur du support (2) et l'épaisseur de la bande textile (11, 12) correspondent conjointement à l'épaisseur du support (2) dans la zone restante.

29. Procédé selon la revendication 28, **caractérisé en ce que**, pour la réalisation des couches de colle (15, 16, 42, 43, 44, 45), des feuilles adhésives sont insérées entre le support (2, 32) et les bandes textiles (11, 12, 39, 40) et les feuilles adhésives, pour la réalisation de l'assemblage collé, sont exposées à une température telle qu'elles obtiennent un pouvoir adhésif.

30. Procédé selon la revendication 29, **caractérisé en ce que** les feuilles adhésives (15, 16, 42, 43, 44, 45) sont exposées en plus à une pression élevée.

31. Procédé selon l'une quelconque des revendications 28 à 30, **caractérisé en ce que** pour les couches de colle (15, 16, 42, 43, 44, 45), on utilise une colle silicone, une colle thermofusible, une colle réactive ou une colle de contact.

32. Procédé selon l'une quelconque des revendications 28 à 31, **caractérisé en ce que** les couches de colle (15, 16) sont étirées de telle sorte qu'elles s'étendent au-delà des côtés des bandes textiles (11, 12), opposés aux bords frontaux (4, 5).

33. Procédé selon l'une quelconque des revendications 28 à 32, **caractérisé en ce que** les couches de colle (15, 16) sont étirées également au-dessus des bords frontaux (4, 5) du support (2).

34. Procédé selon la revendication 33, **caractérisé en ce que** les couches de colle (15, 16) sont étirées au-delà des bords frontaux (4, 5) du support (2) sur l'autre côté plat du support (2).

35. Procédé selon l'une quelconque des revendications 28 à 34, **caractérisé en ce que** le support est réalisé sous forme de tissu de support (2) et **en ce que** des fils de trame (3) ont été enlevés dans la zone prévue pour les bandes textiles (11, 12), afin de réduire l'épaisseur du tissu de support (2).

36. Procédé selon l'une quelconque des revendications 28 à 35, **caractérisé en ce que** les bandes textiles (11, 12) sont disposées sur le côté du support (2) sur lequel l'épaisseur a été diminuée.

37. Procédé selon l'une quelconque des revendications 28 à 36, **caractérisé en ce que** les bandes textiles (11, 12) sont disposées sur la face intérieure du support (2).

38. Procédé selon l'une quelconque des revendications 28 à 37, **caractérisé en ce que** les bandes textiles (11, 12) sont en plus cousues avec le support (2).

39. Procédé selon la revendication 38, **caractérisé en ce que** la couture est effectuée sous la forme de bandes de piqûre (17 - 24) qui s'étendent parallèlement aux bords frontaux (4, 5) du support (2) et/ou transversalement à ceux-ci.

40. Procédé selon la revendication 39, **caractérisé en ce que** les bandes textiles (11, 12) sont cousues sur les bords extérieurs orientés transversalement aux bords frontaux (4, 5) du support (2).

41. Procédé selon l'une quelconque des revendications 28 à 40, **caractérisé en ce qu'**une couche de recouvrement (25, 34) est déposée sur le support (2) sur le côté plat extérieur.

42. Procédé selon la revendication 41, **caractérisé en ce qu'**un revêtement (25) est déposé pour former la couche de recouvrement.

43. Procédé selon la revendication 42, **caractérisé en ce que** pour le revêtement (25), on utilise un élastomère de silicone, un élastomère de silicone fluorée, un élastomère de polyuréthanne et/ou un élastomère acrylique.

44. Procédé selon la revendication 42 ou 43, **caractérisé en ce que** le revêtement (25) est déposé sur une épaisseur jusqu'à 2 mm.

45. Procédé selon la revendication 41, **caractérisé en ce qu'**une nappe de fibres (34, 62) est déposée pour former la couche de recouvrement.

46. Procédé selon la revendication 45, **caractérisé en ce que** la nappe de fibres (34, 62) est appliquée par aiguilletage.

47. Procédé selon la revendication 45 ou 46, **caractérisé en ce que** des rainures (37, 38) sont formées, en particulier fraisées, dans la nappe de fibres (34, 62) à partir des bords frontaux (35, 36) de la bande de transport (31, 61) de manière à dégager le support (32), et les bandes textiles (39, 40) conjointement avec les couches de colle (42, 43, 44, 45) sont insérées dans les rainures (37, 38), et **en ce qu'**il se forme alors un assemblage collé avec le support (31, 61).

48. Procédé selon la revendication 47, **caractérisé en ce que** les bandes textiles (39, 40), conjointement avec des couches de colle (42, 43, 44, 45) déposées sur les deux faces, sont insérées dans les rainures (37, 38) et sont reliées, d'une part, avec le support (31, 61) et, d'autre part, avec la nappe de fibres (34, 62).

49. Procédé selon l'une quelconque des revendications 41 à 48, **caractérisé en ce que**, avant l'application de la couche de recouvrement (25, 34, 62), les spirales (7, 8, 47, 48) sont couplées au moyen du fil métallique de fixation (10, 50) et, ensuite, la couche de recouvrement (25, 34, 62) est également déposée sur l'assemblage par fil métallique (6, 46) et **en ce que**, ensuite, la couche de recouvrement (25, 34, 62), dans la zone des spirales (7, 8, 47, 48) ou décalée par rapport à celles-ci, est séparée sur toute la longueur des bords frontaux (4, 5, 35, 36) du support (2, 32).

50. Procédé selon la revendication 49, **caractérisé en ce que**, avant l'application de la couche de recouvrement (25, 34, 62), une bande de recouvrement (26) est déposée sur les spirales.

51. Procédé selon la revendication 50, **caractérisé en ce qu'**un ruban textile est utilisé pour former la bande de recouvrement (26).

52. Procédé selon l'une quelconque des revendications 28 à 51, **caractérisé en ce que** pour les spirales (7, 8, 47, 48), on utilise du polyéthylène téréphtalate (PET), du polysulfure de phénylène (PPS) ou du polyétheréthercétone (PEEK).

53. Procédé selon l'une quelconque des revendications 28 à 52, **caractérisé en ce que** pour le support (2, 32), on utilise du polyéthylène téréphtalate (PET), du polyamide (PA), du polyvinylidènefluorure (PVDF), du polysulfure de phénylène (PPS) ou des aramides ou des combinaisons de ceux-ci.

54. Procédé selon l'une quelconque des revendications 28 à 53, **caractérisé en ce que** pour le support (2, 32), on utilise des fils (3), qui sont formés par des monofilaments, des multifilaments, des fils filés, des fils retors ou des combinaisons de ceux-ci.
